# EUROPEAN PATENT APPLICATION

(11) **EP 2 592 897 A1**
(43) Date of publication of application: **15.05.2013**
(21) Application number: 11803564.1
(22) Date of filing: 05.07.2011
(51) Int. Cl.: H04W 88/18, G06F 15/00

(54) **THIN CLIENT SYSTEM, MANAGEMENT SERVER, MANAGEMENT METHOD, AND PROGRAMME**

(30) Priority: 06.07.2010 JP 2010153782
(71) Applicant: NEC Corporation, Tokyo 108-8001 (JP)
(72) Inventor: OZAWA, Kazunori, Tokyo 108-8001 (JP)
(74) Representative: Glawe, Delfs, Moll
(86) International application number: PCT/JP2011/065319
(87) International publication number: WO 2012/005230

(57) **Abstract**

A thin client system comprises: first thin client server that includes first virtual client unit connected to mobile terminal via packet forwarding apparatus, and first storage unit storing user data received from mobile terminal via first virtual client unit; second thin client server that includes second virtual client unit connected to mobile terminal via packet forwarding apparatus, and second storage unit storing user data received from mobile terminal via second virtual client unit; and management server that, when destination of connection of mobile terminal is changed from first virtual client unit to second virtual client unit, reads out user data of mobile terminal from first storage unit, based on position information of mobile terminal, and writes read-out user data in second storage unit. In thin client system for mobile terminal, services may continue to be rendered even though mobile terminal has moved.

## Description

### TECHNICAL FIELD

### [Cross-Reference to Related Application]

The present application claims benefit of the priority right based on JP Patent Application 2010-153782 filed on July 6, 2010. The entire contents of disclosure of the Patent Application of the senior filing date are to be incorporated by reference herein.
This invention relates to a thin client system, a management server and a management method, and a program. More particularly, it relates to a thin client system, a management server and a management method, and a program of the remote system in which a mobile terminal has communication with a virtual client(s) of a thin client server(s) on a mobile network via a packet forwarding apparatus.

### BACKGROUND

It is felt that, owing to the progress in speed and capacity of the mobile network, brought about by introduction of the LTE (Long Term Evolution) or EPC (Evolved Packet Core) technology, new services will be offered which take advantage of the network's high speed and large capacity. These new services may be enumerated by, for example, 3D high definition games, large scale database retrieval, picture recognition/matching, high definition pictures (still or moving pictures), high quality audio or 3D audio.

On the other hand, attention is now paid to a thin client system, in order to prevent information leakage and in order to diminish TCO (Total Cost of Ownership). Under the thin client system, it is meant such a system provided with a thin client terminal(s) and a thin client server(s), in which an application software or crucial data are not stored in the thin client terminal but are stored in a thin client server. The thin client terminal then accesses the thin client server to execute application software.

There is known a virtual client configuration thin client system as an example of the thin client system. Under the virtual client thin client system, it is meant such a system in which each user possesses exclusively his/her own virtual client on the thin client server. He/she then runs an OS or application software thereon to display its picture image on a monitor of his/her own thin client terminal. Non-Patent Literature I shows a virtual PC configuration thin client system which has implemented a virtual client configuration thin client system for PCs.

In Patent Literature 1, there is disclosed such a system for a radio communication environment in which, when a handset or a mobile terminal has moved from one network to another, a trigger signal promoting hand-off of voice communication is used to enable hand-off without interrupting an application.

### CITATION LIST

### [Patent Literature]

[Patent Literature 1] JP Patent Kokai Publication No. JP-P2008-035520A

### [Non-Patent Literature]

### [Non-Patent Literature 1]

"Virtual PC Configuration Thin Client System Virtual PC Center," [online], retrieved on June 24, 2010, the Internet <URL: http://www.nec.co.jp/clsol/doc/vpcc_3_2.pdf>.

### SUMMARY

### TECHNICAL PROBLEM

The disclosures of the above mentioned Patent and Non-Patent Literatures are to be incorporated herein by reference. Following is an analysis made by the present inventor.

In offering services to a mobile terminal based on the thin client system, it is necessary that movements of the mobile terminal are absorbed and hidden by an apparatus provided on a mobile network so as to enable services to be supplied without interruption despite such movements of the mobile terminal. By so doing, it should be possible to preclude problems otherwise caused by such movements to the user who is to benefit from those services.

In the conventional services, there are cases in which, when an operator (communication company) is introducing new services, pre-existing mobile terminals are unable to cope with such new services due to hardware constraints at the mobile terminals. In these cases, a user would have to purchase a mobile terminal of improved performance in keeping up with initiation of the new services.

Moreover, if a new compression and encoding system for data including picture images or audio is introduced with progress in the codec technique, there is raised such a problem that data encoded may not be decoded except by a mobile terminal loaded with a decoder capable of accommodating the new system.

Thus, there is a need in the art to enable to supply services continuously in a thin client system for a mobile terminal even upon movement of a location of the mobile terminal. It is an object of the present disclosure to provide a thin client system, a management server, a management method and a program that cope with such need.

### SOLUTION TO PROBLEM

According to a first aspect of the present disclosure, there is provided a thin client system comprising: a first thin client server that includes a first virtual client unit connected to a mobile terminal via a packet forwarding apparatus disposed on a mobile network, and a first storage unit storing user data received from the mobile terminal via the first virtual client unit; a second thin client server that includes a second virtual client unit connected to the mobile terminal via a packet forwarding apparatus disposed on the mobile network, and a second storage unit storing user data received from the mobile terminal via the second virtual client unit; and a management server that, when a destination of connection of the mobile terminal is changed from the first virtual client unit to the second virtual client unit, reads out user data of the mobile terminal from the first storage unit via the first virtual client unit, based on position information of the mobile terminal, and writes the read-out user data in the second storage unit via the second virtual client unit.

According to a second aspect of the present disclosure, there is provided a thin client system, comprising: a first thin client server that includes a plurality of virtual client units, each of which is connected to a mobile terminal via a packet forwarding apparatus on a mobile network, a storage unit that stores user data of the plurality of virtual client units via the plurality of virtual client units, and a picture image encoding unit that sets an application in operation based on command information from the mobile terminal to generate a picture image to compress and encode all or part of the picture image to output an encoded result; a management server that acquires position information of the mobile terminal from the packet forwarding apparatus in case the mobile terminal so far connected to the first thin client server has moved and thereafter has connected to an M'th thin client server, M being not less than two, and reads out a user data of the mobile terminal in question from the storage unit of the first thin client server based on the position information to write the read-out user data in the storage unit of the M'th thin client server; and the mobile terminal that connects to the virtual client unit(s) of the first thin client server or to the virtual client unit(s) of the M'th thin client server to receive the encoded result, and decodes the encoded result by a picture image decoding unit to demonstrate a picture image.

According to a third aspect of the present disclosure, there is provided a management server. In case a destination of connection of a mobile terminal is changed from a first virtual client unit of a first thin client server to a second virtual client unit of a second thin client server, the management server reads out user data of the mobile terminal from a first storage unit of the first thin client server via the first virtual client unit, based on position information of the mobile terminal. The management server writes the read-out user data in a second storage unit of the second thin client server via the second virtual client unit. The first virtual client unit is connected to the mobile terminal via a packet forwarding apparatus(es). The first storage unit stores user data received from the mobile terminal via the first virtual client unit. The second virtual client unit is connected to the mobile terminal via a packet forwarding apparatus(es). The second storage unit stores user data received from the mobile terminal via the second virtual client unit.

According to a fourth aspect of the present disclosure, there is provided a management method comprising: by a computer, in case a destination of connection of a mobile terminal is changed from a first virtual client unit of a first thin client server to a second virtual client unit of a second thin client server, reading out user data of the mobile terminal from a first storage unit of the first thin client server via the first virtual client unit based on position information of the mobile terminal; and writing the read-out user data in a second storage unit of the second thin client server via the second virtual client unit. The first virtual client unit is connected to the mobile terminal via a packet forwarding apparatus(es). The first storage unit stores user data received from the mobile terminal via the first virtual client unit. The second virtual client unit is connected to the mobile terminal via a packet forwarding apparatus(es). The second storage unit stores user data received from the mobile terminal via the second virtual client unit.

According to a fifth aspect of the present disclosure, there is provided a program that causes a computer to execute: in case a destination of connection of a mobile terminal is changed from a first virtual client unit of a first thin client server to a second virtual client unit of a second thin client server, reading out user data of the mobile terminal from a first storage unit of the first thin client server via the first virtual client unit based on position information of the mobile terminal; and writing the read-out user data in a second storage unit of the second thin client server via the second virtual client unit. The first virtual client unit is connected to the mobile terminal via a packet forwarding apparatus(es). The first storage unit stores user data received from the mobile terminal via the first virtual client unit. The second virtual client unit is connected to the mobile terminal via a packet forwarding apparatus(es). The second storage unit stores user data received from the mobile terminal via the second virtual client unit.

### ADVANTAGEOUS EFFECTS OF INVENTION

In the thin client system, management server and the method as well as the program according to the present disclosure, service(s) may continue to be supplied if a location of a mobile terminal has changed in the thin client system for the mobile terminal.

### BRIEF DESCRIPTION OF DRAWINGS

Fig. 1 is a schematic view showing a configuration of a thin client system of a first exemplary embodiment.
Fig. 2 is a schematic view showing a configuration of a thin client system of a second exemplary embodiment.
Fig. 3 is a block diagram showing a configuration of a first thin client server in the thin client system of the second exemplary embodiment.
Fig. 4 is a block diagram showing a configuration of an M'th thin client server in the thin client system of the second exemplary embodiment.
Fig. 5 is a block diagram showing a configuration of a virtual client unit of a thin client server in the thin client system, of the second exemplary embodiment.

### DESCRIPTION OF EMBODIMENTS

A thin client system in mode 1 may be the thin client system according to the above mentioned first aspect.

In a thin client system in mode 2, the first and second storage units may store the user data received from the mobile terminal in association with an identifier of the mobile terminal, and the first and second virtual client units may reference the identifier to discriminate the user data associated with each mobile terminal.

In a thin client system in mode 3, the management server may acquire the position information from the packet forwarding apparatus.

In a thin client system in mode 4, each of the first and second virtual client units may include a picture image encoding unit that sets an application in operation based on command information from the mobile terminal to generate a picture image, and compresses and encodes all or part of the picture image generated to output an encoded result.

A thin client system in mode 5 may further comprise: a mobile terminal that is connected to one of the first and second virtual client units, receives an encoded result, and decodes the received encoded result by a picture image decoding unit to demonstrate the picture image.

A thin client system in mode 6 may be the thin client system, according to the above mentioned second aspect.

In a thin client system in mode 7, the mobile network may be a mobile packet network or a mobile LTE(Long Term Evolution)/EPC(Evolved Packet Core) network.

A management server in mode 8 may be the management server according to the above mentioned third aspect.

A management method in mode 9 may be the management method according to the above mentioned fourth aspect.

A program in mode 10 may be the program according to the above mentioned fifth aspect.

In the thin client system, management server and the management method as well as the program, according to the present disclosure, if the mobile terminal has moved and the thin client server as the destination of connection of the mobile terminal has changed, the management server references the position information of the mobile terminal. The management server reads out the user data from the thin client server to which the mobile terminal connected before the change to write the data in the thin client server to which the mobile terminal newly connected after the change. Thus, in the thin client system, management server and the management method as well as the program, according to the present disclosure, services may continue to be supplied in the thin client system for the mobile terminal even though the location of the mobile terminal has changed.

Preferred exemplary embodiments will now be described in detail with reference to the drawings. It is observed that the references to the drawings with the reference signs is mainly for assisting in the understanding and is not intended to limit the subject disclosure to the modes illustrated.

### (First Exemplary Embodiment)

A thin client system according to a first exemplary embodiment will now be described with reference to the drawings.

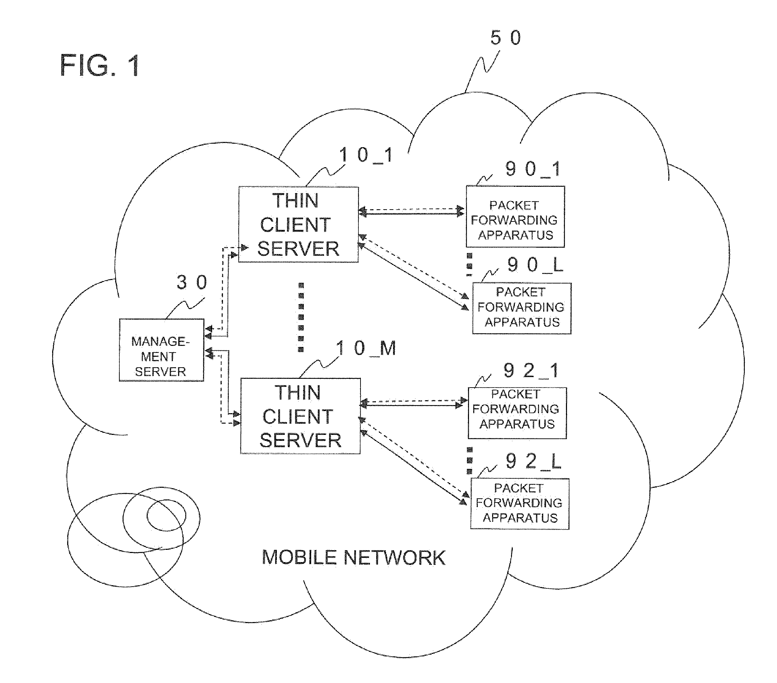

Referring to Fig. 1, the thin client system includes, on a mobile network, a plurality of thin client servers 10_1 to 10_M, and a management server 30.

Each of the thin client servers 10_1 to 10-M stores user data received from a mobile terminal via a packet forwarding apparatus.

It is now assumed that a destination of connection of the mobile terminal has changed from a first thin client server, such as the thin client server 10_1, to a second thin client server, such as the thin client server 10_M. In such case, the management server 30 reads out user data of the mobile terminal from the first thin client server, based on position information of the mobile terminal, while writing the so read out user data in the second thin client server.

Each of the thin client servers 10_1 to 1_M preferably includes a virtual client unit, connected to the mobile terminal via the packet forwarding apparatus, and a storage unit that stores the user data received from the mobile terminal via the virtual client unit.

It is now assumed the destination of connection of the mobile terminal has changed from a first virtual client unit, such as a virtual client unit of the thin client server 10_1, to a second virtual client unit, such as a virtual client unit of the thin client server 10_M. In such case, the management server 30 may operate, based on position information of the mobile terminal, to read out user data of the mobile terminal from a first storage unit, for example, a storage unit of the thin client server 10_1, via the first virtual client unit, as well as to write the so read out user data in a second storage unit, such as a storage unit of the thin client server 10_M, via the second storage unit.

The storage unit, provided in each of the thin client servers 10_1 to 10_M, preferably stores the user data, received from the mobile terminal, in association with an identifier of the mobile terminal.

The first and second virtual client units preferably refer to the identifier to discriminate user data for each of the mobile terminals.

The management server 30 may acquire the position information of the mobile terminal from the packet forwarding apparatus.

In the thin client system of the present exemplary embodiment, the mobile terminal has moved to a new location, such that the thin client server of the destination of connection of the mobile terminal has changed. In such case, the management server 30 may refer to the position information of the mobile terminal to read out user data from the thin client server, to which the mobile terminal connected before the location change, while writing the so read out user data in the thin client server to which the mobile terminal has become connected after the location change.

Thus, in the thin client system of the present exemplary embodiment, it is possible to continue to render services, in the thin client system for the mobile terminals, even though the location of the mobile terminal has changed.

### (Second Exemplary Embodiment)

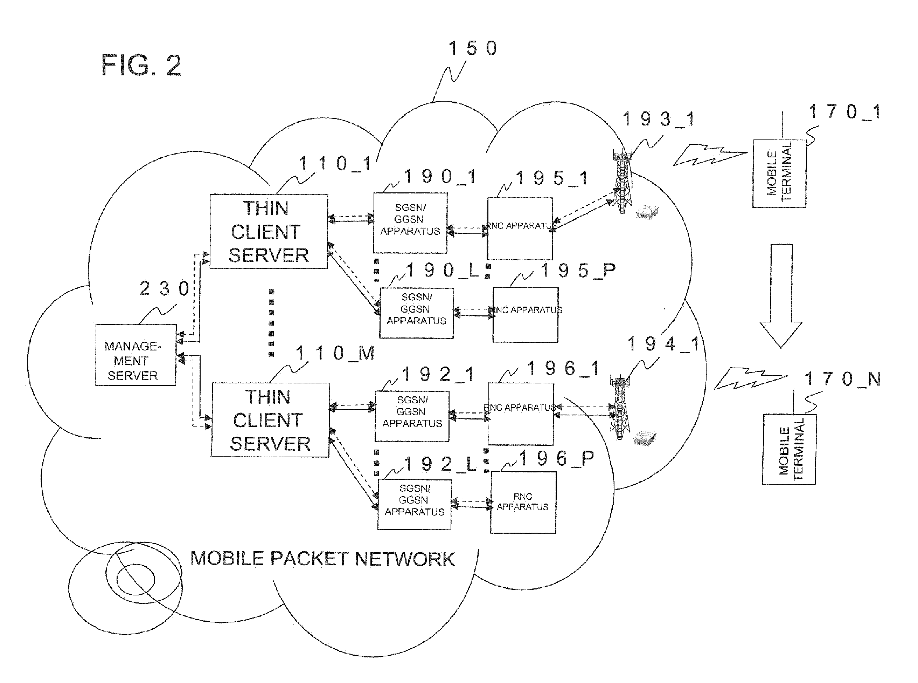

A thin client system of a second exemplary embodiment will now be described in detail with reference to Figs. 2 to 5.

Fig. 2 shows a connection configuration of a thin client system of the present exemplary embodiment. Fig. 2 shows a configuration in which a mobile packet network 150 is used as a mobile network and an SGSN/GGSN (xGSN) apparatus is used as a packet forwarding apparatus.

It is observed that the SGSN/GGSN apparatus means an SGSN (Serving GPRS Support Node) apparatus and a GGSN (Gateway GPRS Support Node) apparatus, in which the two apparatuses are provided in one and the same location.

As an example service, a mobile terminal 170_1 is connected in Fig. 2 to a first virtual client unit of a first thin client server 110_1 disposed on a mobile packet network 150 to operate the first virtual client unit. One example service rendered is storing the picture image (a still or moving picture image) photographed by the mobile terminal by a camera as user data in the storage unit of the client server and reading out the picture image stored as user data in the storage unit for browsing.

In Fig. 2, the mobile terminal 170_1 sends out a connection signal via a base station 193_1, an RNC (Radio Network Controller) apparatus 195_1 and an SGSN/GGSN apparatus 190_1 to the first thin client server 110_1.

By the connection signal is meant such a signal sent out at the mobile terminal 170_1 by e.g., a key operation at the mobile terminal 170_1. The protocol used for the connection signal may be any suitable known protocol. Here, TCP/IP (Transmission Control Protocol/Internet Protocol) and, as its upper layer, HTTP (Hypertext Transfer Protocol), may be used. It is observed that SIP (Session Initiation Protocol) may also be used besides HTTP.

The connection signal, as sent out at the mobile terminal 170_1, passes through the base station 193_1, RNC apparatus 195_1 and the SGSN/GGSN apparatus 190_1, in this order, until ultimately arriving at the first thin client server 110_1. In this manner, the first thin client server 110_1 receives the connection signal sent out at the mobile terminal 170_1.

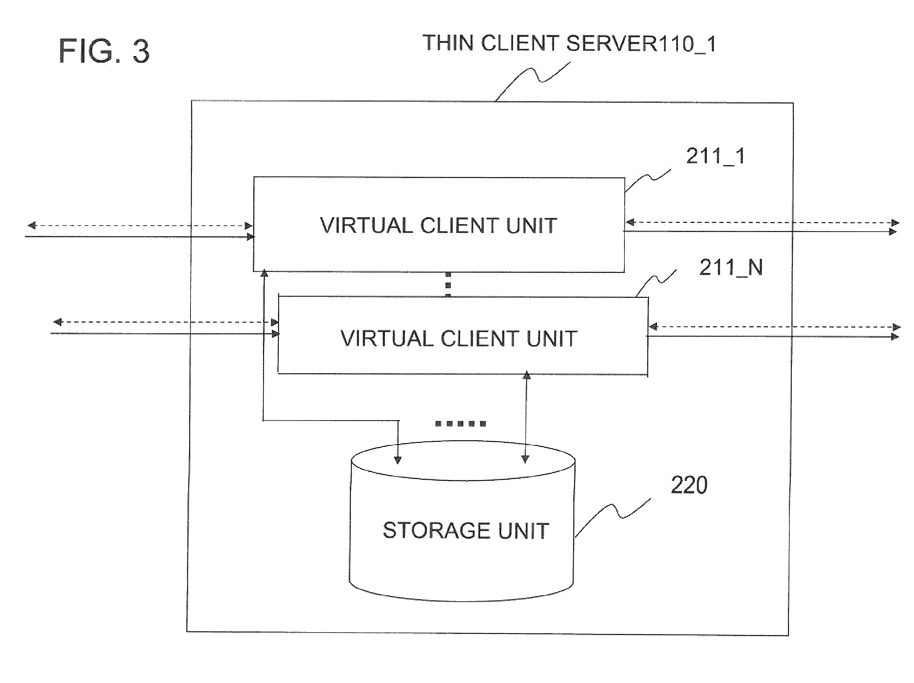

Fig. 3 depicts a block diagram showing a configuration of the first thin client server 110_1, which first thin client server 110_1 provides a virtual client function for each of a plurality of the mobile terminals. To this end, the first thin client server 110_1 includes an N-number of virtual client units, where N≥ 2.

In the following, the case where the first mobile terminal 170_1 connects to a first virtual client unit 211_1 will be explained. It is observed that an operation of connection of the other mobile terminals is the same as that of the first mobile terminal and hence the corresponding explanation is dispensed with.

Referring to Fig. 3, the first virtual client unit 211_1 exchanges a control signal from the first mobile terminal 170_1, indicated by broken lines in Fig. 3, between it and the SGSN/GGSN apparatus 190_1, while outputting data signals, such as compressed and encoded picture image signals or compressed and encoded audio signals, indicated by solid lines in Fig. 3, to the mobile terminal. It is observed that remaining virtual client units from a second virtual client unit 211_2 to an Nth virtual client unit 211_N are the same in configuration as the first virtual client unit 211_1 and hence the corresponding explanation is dispensed with.

The first virtual client unit 211_1 acquires the user information or user data from the presently connected mobile terminal via the SGSN/GGSN apparatus to write the acquired information or data in a storage unit 220 from one ID number of the mobile terminal to another. The user information may, for example, be a picture image (still or moving picture) photographed by a camera of the mobile terminal 170_1.

The storage unit 220 stores the user information or the user data from one ID number of the mobile terminal 170_1 to another. It is also possible for the other virtual client units to read out the user information and user data stored in the storage unit 220. It is thus possible for the virtual client units 211_1 to 211_N to read out from the storage unit 220 the user information or the user data, pertinent to the ID number, of the currently connected mobile terminal based on its ID number.

Reverting to Fig. 2, it is assumed that the mobile terminal 170_1 has moved to a location occupied in Fig. 2 by the mobile terminal 170_N. With such change in the location, from its former position, the mobile terminal 170_1 behaves as the mobile terminal 170_N.

The connection signals, sent out at the mobile terminal 170_N, passes through a base station 194_1, an RNC apparatus 196_1 and an SGSN/GGSN apparatus 192_1 in this order until arriving at an M'th thin client server 110_M. In this manner, the M'th thin client server 110_M receives the connection signal sent out at the mobile terminal 170_N.

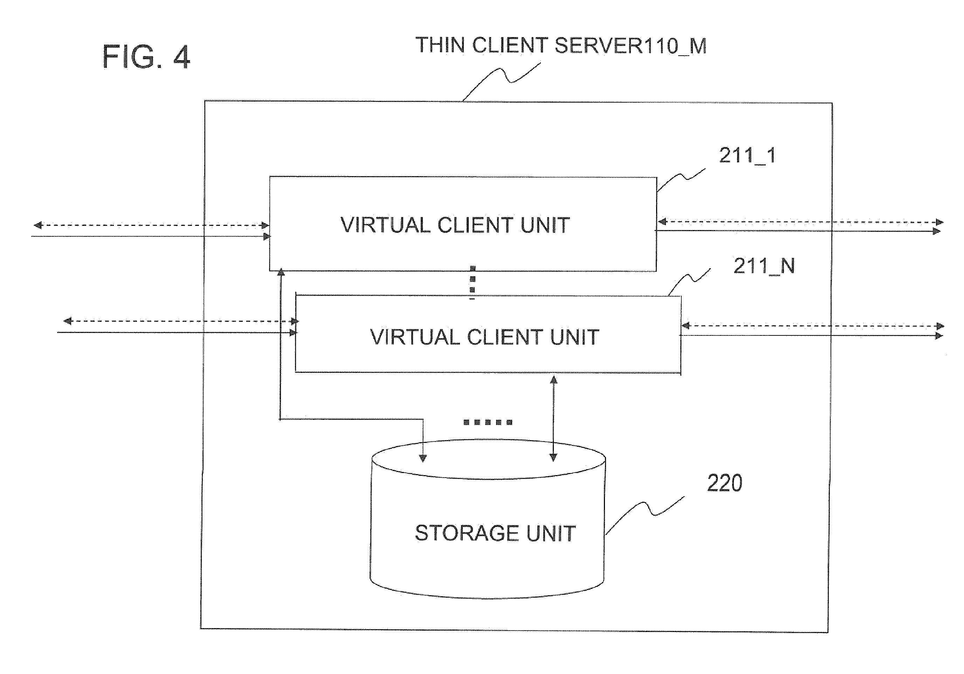

Fig. 4 shows a configuration of the M'th thin client server 110_M. It is observed that the operation of the components of Fig. 4 denoted by the same symbols as those of Fig. 3 are the same as that of the corresponding components of Fig. 3 and hence is not here explained for simplicity.

Reverting to Fig. 2, a management server 230 is connected to an M-number of thin client servers of from the first thin client server 110_1 to the M'th thin client server 110_M. The management server 230 controls write and readout, among the thin client servers, of ID numbers, user information or user data of the mobile terminals as stored in the storage units of the thin client servers.

Such an example case is now considered in which the mobile terminal has changed its place such that a state in which the mobile terminal is connected to the first thin client server 110_1 has switched to a state in which the mobile terminal is connected to the M'th thin client server 110_M.

In this case, the management server 230 reads out, via the virtual client unit 211_1 of the first thin client server 110_1, to which the mobile terminal has so far connected, the user information or user data of the ID number in question stored in the storage unit 220 of the first thin client server 110_1. The management server outputs the user information or data read out to the M'th thin client server 110_M to write the user information or data in the storage unit thereof, along with the ID number, via the first virtual client unit disposed in the M'th thin client server 110_M.

The first virtual client unit 211_1, disposed in the M'th thin client server 110_M, reads out from the storage unit 220 the user information and the user data of the ID number in question. The first virtual client unit 211_1 sets the picture image resolution, based on the user information, for example, while reading out the user data to send the so read out user data to the mobile terminal.

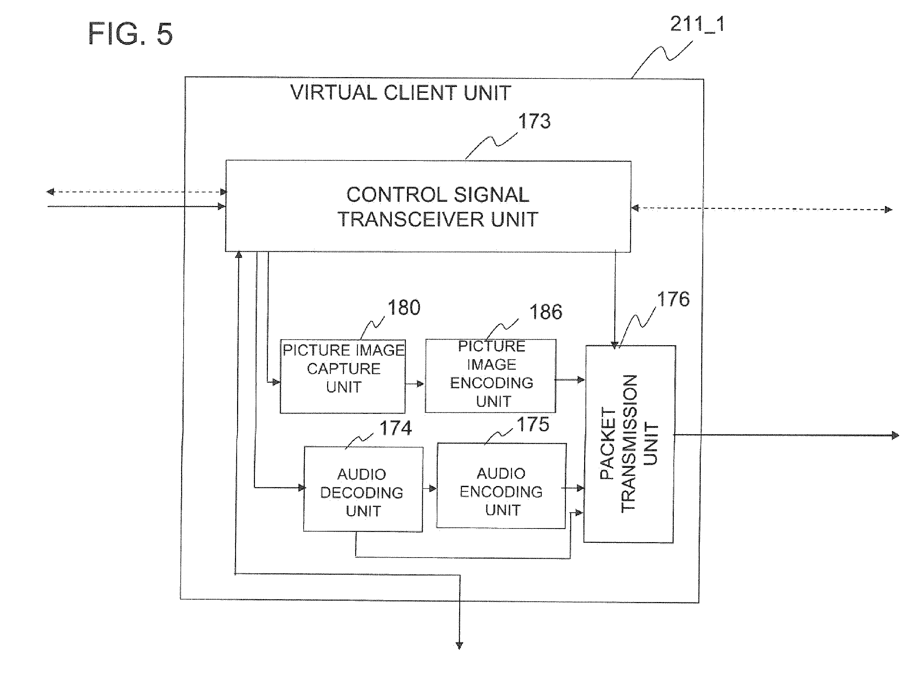

Fig. 5 depicts a block diagram showing a configuration of the first virtual client unit 211_1. Since the virtual client unit 211_1 of the first thin client server 110_1 is the same in configuration as the virtual client unit 211_1 of the M'th thin client server 110_M, explanation will now be made of the virtual client unit 211_1 of the M'th thin client server 110_M.

Referring to Fig. 5, a control signal transceiver unit 173 receives a control signal from the mobile terminal 170_N via the SGSN/GGSN apparatus 190_1. It is here assumed that, before the mobile terminal has moved, the user of the mobile terminal has photographed a picture image with a camera and has stored it as user data in the storage unit 220 of the first thin client server 110_1. It is also assumed that, since the mobile terminal has moved, the management server 230 reads out the user data from the storage unit 220 possessed by the first thin client server 110_1 to write the data in the storage unit possessed by the M'th thin client server 110_M.

It is then assumed that, in Fig. 5, the control signal transceiver unit 173 has received from the mobile terminal, 170_N the connection signal which runs to the effect that the picture image stored as user data in the thin client server is to be browsed. The control signal transceiver unit 173 then reads a command for browsing the ID number or the user data contained in the connection signal, or the information including the sort of the user data, e.g., a picture image, and reads out the user data from the storage unit 220.

The control signal transceiver unit 173 reads out the user information and the user data, such as the picture image, and runs the application in operation to decode the picture image. The control signal transceiver unit 173 generates the picture image information to output the user information and the picture image information to a picture image capture unit 180.

The picture image capture unit 180 inputs the above mentioned user information and sets the picture image resolution to capture entire or part of the picture image at the so set resolution to output the picture image to a picture image encoding unit 186. As the picture image resolution, the QVGA (Quarter Video Graphics Array), for example, may be used.

The picture image encoding unit 186 inputs the above mentioned user information and output picture image data from the picture image capture unit 180 to compress and encode them in accordance with a pre-set compression and encoding system to output the compressed and encoded signal to a packet transmission unit 176.

An audio decoding unit 174 checks to see whether or not audio data is contained in the above mentioned user data. If the audio data is contained in the user data, the audio data is decoded for the time being and the so decoded audio signal is output at an audio encoding unit 175, which audio encoding unit 175 compresses and encodes an output signal of the audio decoding unit 174 in accordance with a pre-set compression and encoding system to output the compressed and encoded signal at the packet transmission unit 176.

The packet transmission unit 176 receives the compressed and encoded signals output from the picture image encoding unit 186 and from the audio encoding unit 175. The packet transmission unit then constructs a packet for each of the compressed and encoded signals and stores the signals in the payload part of the packet, followed by sending out the resulting packet to an SGSN/GGSN apparatus.

It is observed that, in place of the mobile packet network 150 of Fig. 2, a faster mobile LTE/EPC network may be used. In this case, an e-nodcB apparatus may be used in place of the RNC apparatus, in Fig. 2, while an S/P-GW (Serving Gateway/Packet data network Gateway) apparatus may be used in place of the SGSN/GGSN apparatus.

The S/P-GW apparatus receives, from the first thin client server 110_1, a packet on the TCP/IP or UDP/IP protocol, or a file forwarded on these protocols, and converts the packet or file into that on the GTP-U (GPRS Tunneling Protocol-User Plane)/TCP/IP or GTP-U/UDP/IP protocol. The S/P-GW apparatus outputs a compressed and encoded bit stream or file to the e-nodeB apparatus, which e-nodeB apparatus converts the bit stream or file into that on the PDCP/RLC (Packet Data Convergence Protocol/Radio Link Control) protocol to send out the resulting packet or file to the mobile terminal.

The above described exemplary embodiments may be modified in many ways. For example, the SGSN/GGSN apparatus 190_1 may be arranged separated into the SGSN apparatus and the GGSN apparatus.

In the above described exemplary embodiments, a command signal from the mobile terminal may be a signal on SIP or SDP (Session Description Protocol).

In addition, in the above described exemplary embodiments, the thin client system is not limited to the virtual client configuration thin client system (Non-Patent Literature 1).

In the present exemplary embodiment, the management server 230 on the mobile network may read the user information or user data from the thin client server to which the mobile terminal connected before its movement, and write the information or data read out in the thin client server to which the mobile terminal has currently connected at its movement destination, even though the mobile terminal has moved. It is thus possible to continue to render services, regardless of movement of the mobile terminal, as the fact of such movement is hidden from the end user.

Moreover, if, in the present exemplary embodiment, an operator introduces new services, these can be introduced by updating the application software in each thin client server installed on the network. It is thus unnecessary to newly purchase or remodel a mobile terminal each time a new service is introduced.

In addition, if a new compression and encoding system is introduced for compressing and encoding data such as picture image data or audio data, in keeping up with progress in the codec technique, such new system may be hidden on the server side, there being no necessity to modify an IF (Interface) to the terminal. It is thus unnecessary to remodel the conventional terminal, which may thus be used unchanged.

The disclosures of the above Patent Literature and Non-Patent Literature are incorporated herein by reference thereto. Modifications and adjustments of the exemplary embodiments are possible within the scope of the overall disclosure (including the claims) of the present invention and based on the basic technical concept of the present invention. Various combinations and selections of various disclosed elements (including each element of each claim, each element of each exemplary embodiment, each element of each drawing, etc.) are possible within the scope of the claims of the present invention. That is, the present invention of course includes various variations and modifications that could be made by those skilled in the art according to the overall disclosure including the claims and the technical concept. Particularly, any numerical range disclosed herein should be interpreted that any intermediate values or subranges falling within the disclosed range are also concretely disclosed even without specific recital thereof.

Part or all of the above described exemplary embodiments may be stated as supplementary notes shown below. However, these supplementary notes are given merely for illustrations and are not intended to limit the present invention.

### (Supplementary note 1)

A thin client system comprising:
a first thin client server that includes a first virtual client unit connected to a mobile terminal via a packet forwarding apparatus, and
a first storage unit storing user data received from the mobile terminal via the first virtual client unit;
a second thin client server that includes a second virtual client unit connected to the mobile terminal via a packet forwarding apparatus, and a second storage unit storing user data received from the mobile terminal via the second virtual client unit; and
a management server that, when a destination of connection of the mobile terminal is changed from the first virtual client unit to the second virtual client unit, reads out user data of the mobile terminal from the first storage unit via the first virtual client unit, based on position information of the mobile terminal, and writes the read-out user data in the second storage unit via the second virtual client unit.

### (Supplementary note 2)

The thin client system according to supplementary note 1, wherein
the first and second storage units store the user data received from the mobile terminal in association with an identifier of the mobile terminal, and
the first and second virtual client units reference the identifier to discriminate the user data associated with each mobile terminal.

### (Supplementary note 3)

The thin client system according to supplementary note 1 or 2, wherein the management server acquires the position information from the packet forwarding apparatus.

### (Supplementary note 4)

The thin client system according to any one of supplementary notes 1 to 3, wherein
each of the first and second virtual client units includes a picture image encoding unit that sets an application in operation based on command information from the mobile terminal to generate a picture image, and compresses and encodes all or part of the picture image generated to output an encoded result.

### (Supplementary note 5)

The thin client system according to supplementary note 4, further comprising:
a mobile terminal that is connected to one of the first and second virtual client units, receives an encoded result, and decodes the received encoded result by a picture image decoding unit to demonstrate the picture image.

### (Supplementary note 6)

A thin client system, comprising:
a first thin client server that includes a plurality of virtual client units, each of which is connected to a mobile terminal via a packet forwarding apparatus on a mobile network, a storage unit that stores user data of the plurality of virtual client units via the plurality of virtual client units, and a picture image encoding unit that sets an application in operation based on command information from the mobile terminal to generate a picture image to compress and encode all or part of the picture image to output an encoded result;
a management server that acquires position information of the mobile terminal from the packet forwarding apparatus in case the mobile terminal so far connected to the first thin client server has moved and thereafter has connected to an M'th thin client server, M being not less than two, and reads out the user data of the mobile terminal in question from the storage unit of the first thin client server based on the position information to write the read-out user data in the storage unit of the M'th thin client server; and
the mobile terminal that connects to the virtual client unit of the first thin client server or to the virtual client unit of the M'th thin client server to receive the encoded result, and decodes the encoded result by a picture image decoding unit to demonstrate a picture image.

### (Supplementary note 7)

The thin client system according to any one of supplementary notes 1 to 6, wherein
the mobile network is a mobile packet network or a mobile LTE(Long Term Evolution)/EPC(Evolved Packet Core) network.

### (Supplementary note 8)

A management server, wherein
in case a destination of connection of a mobile terminal is changed from a first virtual client unit of a first thin client server to a second virtual client unit of a second thin client server, the management server reads out user data of the mobile terminal from a first storage unit of the first thin client server via the first virtual client unit, based on position information of the mobile terminal;
the management server writes the read-out user data in a second storage unit of the second thin client server via the second virtual client unit;
the first virtual client unit is connected to the mobile terminal via a packet forwarding apparatus;
the first storage unit stores user data received from the mobile terminal via the first virtual client unit;
the second virtual client unit is connected to the mobile terminal via a packet forwarding apparatus, and
the second storage unit stores user data received from the mobile terminal via the second virtual client unit.

### (Supplementary note 9)

The management server according to supplementary note 8, wherein the management server acquires the position information from the packet forwarding apparatus.

### (Supplementary note 10)

A management method comprising:
by a computer, in case a destination of connection of a mobile terminal is changed from a first virtual client unit of a first thin client server to a second virtual client unit of a second thin client server, reading out user data of the mobile terminal from a first storage unit of the first thin client server via the first virtual client unit based on position information of the mobile terminal; and
writing the read-out user data in a second storage unit of the second thin client server via the second virtual client unit, wherein
the first virtual client unit is connected to the mobile terminal via a packet forwarding apparatus;
the first storage unit stores user data received from the mobile terminal via the first virtual client unit;
the second virtual client unit is connected to the mobile terminal via a packet forwarding apparatus; and
the second storage unit stores user data received from the mobile terminal via the second virtual client unit.

### (Supplementary note 11)

The management method according to supplementary note 10, further comprising:
by the computer, acquiring the position information from the packet forwarding apparatus.

### (Supplementary note 12)

A program that causes a computer to execute:
in case a destination of connection of a mobile terminal is changed from a first virtual client unit of a first thin client server to a second virtual client unit of a second thin client server, reading out user data of the mobile terminal from a first storage unit of the first thin client server via the first virtual client unit based on the position information of the mobile terminal; and
writing the read-out user data in a second storage unit of the second thin client server via the second virtual client unit, wherein
the first virtual client unit is connected to the mobile terminal via a packet forwarding apparatus;
the first storage unit stores user data received from the mobile terminal via the first virtual client unit;
the second virtual client unit is connected to the mobile terminal via a packet forwarding apparatus; and
the second storage unit stores user data received from the mobile terminal via the second virtual client unit.

### (Supplementary note 13)

The program according to supplementary note 12, further causing the computer to execute:
acquiring the position information from the packet forwarding apparatus.

### REFERENCE SIGNS LIST

30, 230 management server
10_1 to 10_M, 110_1 to 110_M thin client server
50 mobile network
90_1 to 90_L, 92_1 to 92_L packet forwarding apparatus
150 mobile network
170_1, 170_N mobile terminal
173 control signal transceiver unit
174 audio decoding unit
175 audio encoding unit
176 packet transmission unit
180 picture image capture unit
186 picture image encoding unit
190_1 to 190_L, 192_1 to 192_L SGSN/GGSN apparatus
193_1, 194_1 base station
195_1 to 195_P, 196_1 to 196_P RNC apparatus
211_1 to 211_N virtual client unit
220 storage unit

## Claims

1. A thin client system, comprising:
a first thin client server that includes a first virtual client unit connected to a mobile terminal via a packet forwarding apparatus disposed on a mobile network, and a first storage unit storing user data received from the mobile terminal via the first virtual client unit;
a second thin client server that includes a second virtual client unit connected to the mobile terminal via a packet forwarding apparatus disposed on the mobile network, and a second storage unit storing user data received from the mobile terminal via the second virtual client unit; and
a management server that, when a destination of connection of the mobile terminal is changed from the first virtual client unit to the second virtual client unit, reads out user data of the mobile terminal from the first storage unit via the first virtual client unit, based on position information of the mobile terminal, and writes the read-out user data in the second storage unit via the second virtual client unit.

2. The thin client system according to claim 1, wherein
the first and second storage units store the user data received from the mobile terminal in association with an identifier of the mobile terminal, and
the first and second virtual client units reference the identifier to discriminate the user data associated with each mobile terminal.

3. The thin client system according to claim 1 or 2, wherein
the management server acquires the position information from the packet forwarding apparatus.

4. The thin client system according to any one of claims 1 to 3, wherein
each of the first and second virtual client units includes a picture image encoding unit that sets an application in operation based on command information from the mobile terminal to generate a picture image, and compresses and encodes all or part of the picture image generated to output an encoded result.

5. The thin client system according to claim 4, further comprising:
a mobile terminal that is connected to one of the first and second virtual client units, receives an encoded result, and decodes the received encoded result by a picture image decoding unit to demonstrate the picture image.

6. The thin client system according to any one of claims 1 to 5, wherein
the first thin client server includes a plurality of virtual client units, each of which is connected to the mobile terminal via a packet forwarding apparatus on a mobile network, a storage unit that stores user data of the plurality of virtual client units via the plurality of virtual client units, and a picture image encoding unit that sets an application in operation based on command information from the mobile terminal to generate a picture image to compress and encode all or part of the picture image to output an encoded result, and
the management server acquires position information of the mobile terminal from the packet forwarding apparatus in case the mobile terminal so far connected to the first thin client server has moved and thereafter has connected to an M'th thin client server, M being not less than two, and reads out the user data of the mobile terminal in question from the storage unit of the first thin client server based on the position information to write the read-out user data in the storage unit of the M'th thin client server.

7. The thin client system according to claim 6, wherein
the mobile terminal connects to the virtual client unit of the first thin client server or to the virtual client unit of the M'th thin client server to receive the encoded result, and decodes the encoded result by a picture image decoding unit to demonstrate a picture image.

8. The thin client system according to any one of claims 1 to 6, wherein
the mobile network is a mobile packet network or a mobile LTE(Long Term Evolution)/EPC(Evolved Packet Core) network.

9. A management server, wherein
in case a destination of connection of a mobile terminal is changed from a first virtual client unit of a first thin client server to a second virtual client unit of a second thin client server, the management server reads out user data of the mobile terminal from a first storage unit of the first thin client server via the first virtual client unit, based on position information of the mobile terminal;
the management server writes the read-out user data in a second storage unit of the second thin client server via the second virtual client unit;
the first virtual client unit is connected to the mobile terminal via a packet forwarding apparatus;
the first storage unit stores user data received from the mobile terminal via the first virtual client unit;
the second virtual client unit is connected to the mobile terminal via a packet forwarding apparatus, and
the second storage unit stores user data received from the mobile terminal via the second virtual client unit.

10. The management server according to claim 9, wherein
the management server acquires the position information from the packet forwarding apparatus.

11. A management method, comprising:
by a computer, in case a destination of connection of a mobile terminal is changed from a first virtual client unit of a first thin client server to a second virtual client unit of a second thin client server, reading out user data of the mobile terminal from a first storage unit of the first thin client server via the first virtual client unit based on position information of the mobile terminal; and
writing the read-out user data in a second storage unit of the second thin client server via the second virtual client unit, wherein
the first virtual client unit is connected to the mobile terminal via a packet forwarding apparatus;
the first storage unit stores user data received from the mobile terminal via the first virtual client unit;
the second virtual client unit is connected to the mobile terminal via a packet forwarding apparatus; and
the second storage unit stores user data received from the mobile terminal via the second virtual client unit.

12. The management method according to claim 11, further comprising:
by the computer, acquiring the position information from the packet forwarding apparatus.

13. A program, that causes a computer to execute:
in case a destination of connection of a mobile terminal is changed from a first virtual client unit of a first thin client server to a second virtual client unit of a second thin client server, reading out user data of the mobile terminal from a first storage unit of the first thin client server via the first virtual client unit based on the position information of the mobile terminal; and
writing the read-out user data in a second storage unit of the second thin client server via the second virtual client unit, wherein
the first virtual client unit is connected to the mobile terminal via a packet forwarding apparatus;
the first storage unit stores user data received from the mobile terminal via the first virtual client unit;
the second virtual client unit is connected to the mobile terminal via a packet forwarding apparatus; and
the second storage unit stores user data received from the mobile terminal via the second virtual client unit.

14. The program according to claim 13, further causing the computer to execute:
acquiring the position information from the packet forwarding apparatus.
